Europäisches Patentamt

European Patent Office

Office européen des brevets

(11) Veröffentlichungsnummer: **0 282 090 B1**

## EUROPÄISCHE PATENTSCHRIFT

(45) Veröffentlichungstag der Patentschrift: **17.06.92**

(51) Int. Cl.⁵: **B23C 5/24**

(21) Anmeldenummer: **88103919.2**

(22) Anmeldetag: **11.03.88**

(54) **Messerkopf.**

(30) Priorität: **12.03.87 DE 3708034**

(43) Veröffentlichungstag der Anmeldung:
**14.09.88 Patentblatt 88/37**

(45) Bekanntmachung des Hinweises auf die
Patenterteilung:
**17.06.92 Patentblatt 92/25**

(84) Benannte Vertragsstaaten:
**AT BE CH DE ES FR GB GR IT LI LU NL SE**

(56) Entgegenhaltungen:
**EP-A- 0 042 667**
**DE-A- 3 140 905**

(73) Patentinhaber: **ENTWICKLUNGSZENTRUM FÜR
ZERSPANUNGSTECHNIK GMBH & CO. KG
An den Stegmatten 67
W-7630 Lahr 17(DE)**

(72) Erfinder: **Kieninger, Walter
Am Schulacker 18
W-7630 Lahr(DE)**

(74) Vertreter: **Patentanwälte Grünecker, Kinkeldey, Stockmair & Partner
Maximilianstrasse 58
W-8000 München 22(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

## Beschreibung

Die Erfindung bezieht sich auf einen Messerkopf mit einem im wesentlichen zylindrischen Grundkörper, welcher an seinem Umfangsbereich mit mehreren zur Stirnseite und zu einem Teil der Außenumfangsfläche geöffneten Nuten versehen ist, in welchen jeweils ein mit einer Schneidplatte versehener Schneidplattenträger angeordnet ist, wobei in Umfangsdrehrichtung hinter dem Schneidplattenträger ein axial verschiebbarer, mit seinen Wirkflächen gegen den Schneidplattenträger und gegen den Grundkörper anliegender Radialverstellkeil vorgesehen ist, sowie ein axial hinter dem Schneidplattenträger angeordneter, in radialer Richtung mittels einer Differentialschraube verschiebbarer Axialverstellkeil und wobei in Umfangsdrehrichtung vor dem Schneidplattenträger ein radial verstellbarer Spannkeil vorgesehen ist. Insbesondere bezieht sich die Erfindung auf einen Messerkopf gemäß dem Oberbegriff des Anspruchs 1 bzw. 2.

Messerköpfe der eingangs genannten Art, wie sie beispielsweise aus der DE-A-3 441 821 bekannt sind und welche vornehmlich als Fräswerkzeuge in der Metallverarbeitung verwendet werden, können für die verschiedensten Drehgeschwindigkeiten verwendbar sein, wobei die jeweils vorzusehende Drehgeschwindigkeit sowohl von dem zu bearbeitenden Material als auch von der Art der Schneidplatten abhängig ist: Dabei muß in dem gesamten zur Anwendung kommenden Drehzahlbereich des Messerkopfes sichergestellt sein, daß die jeweiligen Schneidplatten mit höchster Präzision hinsichtlich der Lage ihrer Schneidkanten relativ zu dem Grundkörper des Messerkopfes einstellbar sind. Insbesondere bei integrierten Fertigungssystemen mit automatischer Fertigungsüberwachung, automatischem Werkzeugwechsel und automatischer Verschleißuberwachung ist es von besonderer Wichtigkeit, daß die Schneidplatten wahrend des Frasvorganges ihre Lage relativ zu dem Grundkörper beibehalten. Dies erweist sich insbesondere bei hohen Drehgeschwindigkeiten von Hochgeschwindigkeitsfrasern als besonders wichtig, da bei diesen die verschiedenen Befestigungs- und Einstellteile des Messerkopfes, bedingt durch die hohe Drehgeschwindigkeit, besonders starken Belastungen, insbesondere im Hinblick auf die dabei auftretende Zentrifugalkraft unterworfen sind.

Der Erfindung liegt die Aufgabe zugrunde, einen Messerkopf der eingangs beschriebenen Art zu schaffen, welcher bei einfachem Aufbau, einfacher Einstellung der Schneidkörper relativ Zum Grundkörper und hoher Betriebssicherheit auch bei hohen Drehgeschwindigkeiten bzw. bei hohen Zerspanungskräften eine positionsgenaue Fixierung der Schneidkörper ermöglicht.

Bezüglich der Merkmalskombination des Anspruchs 1 wird die Aufgabe erfindungsgemäß dadurch gelöst, daß die Kontaktflächen zum verspannen des Schneidplattenträgers auch in Richtung des axial hinten liegenden, radial innen liegenden Bereichs der Nut dienen, und daß die Kontaktflächen gegen eine die Drehachse des Grundkorpers aufweisende und im Bereich der Nut verlaufende Ebene geneigt sind und deren gedachte Verlängerung von dieser durchstoßen wird.

Hinsichtlich der Merkmale des Anspruchs 2 wird die Aufgabe dadurch gelöst, daß bezüglich des Grundkörpers in radialer Richtung nach innen hinter dem Schneidplattenträger in der Nut eine verspannbare Keilprismenanordnung vorgesehen ist, mit der eine im wesentlichen radial wirkende Verspannung auf den Schneidplattenträger aufbringbar ist.

Die Erfindung weist gegenüber dem bekannten Stand der Technik eine Reihe wesentlicher Vorteile auf. Während bei bekannten Messerköpfen, wie etwa dem aus der DE-OS 34 41 821 bekannten Messerkopf eine Verspannung der einzelnen Teile des Messerkopfes, welche zur Lagerung und Einstellung des Schneidkörpers oder der Schneidplatte dienen, hauptsächlich im Hinblick darauf erfolgte, daß die voreingestellte Lage der Schneidkörper oder Schneidplatten relativ zu dem Grundkörper als solche nicht veränderbar ist, wurde durch die Lösung der der Erfindung zugrunde liegenden Aufgabe eine Möglichkeit geschaffen, bei einem Messerkopf auch dann eine Lageveränderung der Schneidkörper oder Schneidplatten zu vermeiden, wenn der Messerkopf während des Frasvorganges mit einer hohen Drehgeschwindigkeit gedreht wird. Derartige hohe Drehgeschwindigkeiten, welche bis zu einem Bereich von 15000 min$^{-1}$ beikleinen Durchmessergrößen reichen können, führen zueinem nicht unerheblichen Anstieg der auftretenden Zentrifugalkräfte. Dies wiederum bewirkt eine erhebliche Aufweitung der verschiedenen kontaktstellen zwischen der Schneidplatte, dem Schneidplattenträger, den Verstellkeilen und der Spanneinrichtung. Diese Aufweitvorgänge führen nicht nur dazu, daß die Schneidplatten oder Schneidkörper ihre voreingestellte Lage, welche üblicherweise auf $\mu$m genau einjustiert wurde, verlassen, sondern auch dazu, daß insbesondere die Schneidplattenträger in den Nuten des Grundkörpers unter ungünstigen Bedingungen zu Schwingungen angeregt werden können, welche auf der zu fräsenden Oberfläche unerwünschte Rattermarken oder ähnliche Unregelmäßigkeiten erzeugen. Durch die erfindungsgemäß vorgeschlagenen Lösungsmöglichkeiten wird diesem Aufweitungs- oder Lockerungseffekt dadurch vorgebeugt, daß der Schneidplattenträger einer zusätzlichen Vorspannung unterworfen wird, welche hauptsächlich in Richtung der bei hohen Drehgeschwindigkeiten angreifenden Zentrifugalkräfte erfolgt. Die Größe der Vorspannung kann bei einem erfindungsgemäßen Messerkopf so gewählt werden, daß die bei hohen Drehzahlen auftretenden Zentrifugalkräfte und die durch diese hervorgerufenen Aufweitungen berücksichtigt und/oder ausgeglichen werden können.

Es erweist sich als besonders vorteilhaft, daß mittels des Spannkeils der Schneidplattenträger in Richtung des axial hinten, radial innen und in Drehrichtung hinten liegenden Bereichs der Nut verspannbar ist. Eine derartige Verspannung führt nicht nur zu einer besonders festen Halterung des Schneidplattenträgers, um zu verhindern, daß dieser bei höheren Drehgeschwindigkeiten aus der Nut herausgeschleudert wird. Vielmehr wird durch die Einwirkung des Spannkeils in erfindungsgemäßer Weise sichergestellt, daß der Schneidplattenträger sich in möglichst satter Anlage an den Wandungen der ihn aufnehmenden Nut befindet. Während bei dem bekannten Messerkopf der Spannkeil den Schneidplattenträger hauptsächlich in Umfangsrichtung verspannte und dies im wesentlichen nur zu einer besonders guten Anlage des Schneidplattenträgers an die in Umfangsdrehrichtung hinten liegende Wandung der Nut führte, wird erfindungsgemäß der Schneidplattenträger nicht nur an die in Drehrichtung hinten liegende Wandung der Nut, sondern auch an die axial hinten liegende und an die radial innen liegende Wandung der Nut angepreßt. Auf diese Weise wird erreicht, daß der Schneidplattenträger eine größtmögliche Berührungsfläche zu dem Grundkörper aufweist. Eine derartige Vorspannung erweist sich nicht nur beim Hochgeschwindigkeitsfräsen als besonders vorteilhaft, vielmehr ist der erfindungsgemäße Messerkopf auch bei niedrigeren Drehzahlen in besonders vorteilhafter Weise einsetzbar.

Eine besonders vorteilhafte Lösung der der Erfindung zugrunde liegenden Aufgabe ist dadurch gegeben, daß in radialer Richtung hinter dem Schneidplattenträger in der Nut eine verspannbare Keilprismenanordnung vorgesehen ist. Mittels dieser Keilprismenanordnung wird erreicht, daß der radial hinten liegende Bereich des Schneidplattenträgers sich auf einem größtmöglichen Flächenbereich gegen die Wandung der Nut abstützt. Durch die Vorspannung, welche bevorzugterweise im wesentlichen in radialer Richtung erfolgt, wird sichergestellt, daß auch bei hohen Drehgeschwindigkeiten, bei großen Zentrifugalkräften oder bei großen Zerspanungskräften keine zu einer ungewünschten Lockerung des Schneidplattenträgers in der Nut führende Aufweitung der funktionswichtigen Bereiche des Grundkörpers auftritt. Die durch die Verspannung der Keilprismenanordnung aufgebrachten Kräfte führen weiterhin in vorteilhafter Weise zu einer festen Anlage des Schneidplattenträgers gegen die Verstellkeile, insbesondere gegen den Radialverstellkeil. Durch die Auswahl der durch die Vorspannung der Keilprismenanordnung aufzubringenden Kraft wird somit nicht nur eine besonders satte Anlage des Schneidplattenträgers gegen die Nut des Grundkörpers erreicht, es wird vielmehr auch möglich, die durch die Zentrifugalkräfte hervorgerufenen Aufweitungen der elastischen Bereiche des Grundkörpers dahingehend zu beeinflussen, daß, analog der Wirkung des obenbeschriebenen Spannkeils eine elastische Vorspannung dieser Bereiche des Grundkörpers und/oder des Schneidplattenträgers erfolgt. Da die durch eine derartige Vorspannung möglicherweise auftretende Lageveränderung der Schneidkanten der Schneidplatten vorausbestimmbar ist, wird erfindungsgemäß vermieden, daß es bei höheren Drehzahlen des Messerkopfes zu Lockerungserscheinungen und damit zum Auftreten der obenbeschriebenen Nachteil kommen kann.

Eine besonders vorteilhafte Ausgestaltung der Erfindung ist dadurch gegeben, daß sowohl der Spannkeil als auch die Keilprismenanordnung gemeinsam vorgesehen sind. Auf diese Weise wird sichergestellt, daß der Schneidplattenträger sich in einer größtmöglichen satten Anlage gegen die Wandungen der Nut befindet. Durch diese Ausgestaltung addieren sich die obenbeschriebenen Vorteile der beiden erfindungsgemäßen Lösungen.

In vorteilhafter Weise sind die Kontaktflächen zwischen dem Spannkeil und dem Schneidplattenträger eben ausgestaltet. Dies führt zum einen zu verringerten Herstellungskosten, zum anderen wird der durch die Vorspannung aufgebrachte Druck besonders gleichmäßig übertragen.

Eine besonders vorteilhafte Ausgestaltung des Spannkeils ist dadurch gegeben, daß dieser im wesentlichen kegelstumpfförmig, zum radial innen liegenden Bereich hin verjüngend ausgebildet ist und daß er mittels einer exzentrisch angeordneten Differentialschraube relativ zum Grundkörper verstellbar ist und eine ebene, keilförmig angeordnete, die Kontaktfläche bildende Abflachung zur Anlage an den Schneidplattenträger umfaßt. Eine derartige Ausgestaltung ermöglicht zum einen eine besonders kostengünstige Herstellung des Spannkeils, da dieser auf üblichen Werkzeugmaschinen spanend hergestellt werden kann. Zum anderen führt eine derartige Ausgestaltung zu einer besonders genauen Einstellbarkeit, da mittels der Differentialschraube in gezielter Weise eine Bewegung des Spannkeils in beide Verschiebungsrichtungen möglich ist. Durch den Winkel der Abschrägung der Abflachung und durch den Winkel der kegelstumpfförmigen Ausgestaltung ist es in besonders einfacher Weise möglich, die durch den Spannvorgang aufzubringenden Kräfte vorauszubestimmen und zu optimieren.

In vorteilhafter Weise ist der Schneidplattenträger so ausgebildet, daß sich seine mit dem Spannkeil in Anlage bringende Kontaktfläche von einem in Umfangsrichtung rückliegenden, in Axialrichtung hinten liegenden Bereich zu einem in Umfangsrichtung weiter vorne liegenden, in Axialrichtung vorne liegenden Bereich erstreckt. Es wird somit in besonders einfacher Weise sichergestellt, daß der Schneidplattenträger durch den Spannkeil in der eingangs genannten Art in Anlage gegen die Wandungen der Nut des Grundkörpers gebracht wird.

Eine besonders günstige und vorteilhafte Ausbildung der Keilprismenanordnung ist dadurch gegeben, daß diese drei Prismen umfaßt, wobei ein erstes Prisma mit seinem Spitzenbereich radial nach innen weisend, mit seiner Grundfläche dem Schneidplattenträger zugewandt angeordnet ist und wobei ein zweites und ein drittes Prisma mit ihren Grundflächen gegen einen radial innen liegenden Bodenbereich der Nut anliegen und wobei das zweite und das dritte Prisma sich weiterhin in Anlage an das erste Prisma und den Schneidplattenträger befinden und daß die Vorspannung der Keilprismenanordnung mittels einer im Schneidplattenträger gelagerten, auf das erste Prisma einwirkenden Spannschraube erfolgt. Eine derartige Ausgestaltung weist zum einen den Vorteil auf, daß die Spannschraube von außen leicht zugänglich ist und jederzeit betätigbar ist. Durch die dreiteilige Ausgestaltung der Keilprismenanordnung wird erreicht, daß die durch die Spannschraube aufgebrachte Vorspannkraft gleichmäßig verteilt wird, so daß verhindert wird, daß der Schneidplattenträger durch die Vorspannung der Keilprismenanordnung in der Nut des Grundkörpers verkantet wird. Ein weiterer Vorteil einer derartigen Ausbildung der Keilprismenanordnung liegt darin, daß das erste Prisma durch Einwirkung der Spannschraube zu einer Kraftübertragung auf die beiden anderen Prismen führt. Es ist somit sichergestellt, daß beide Prismen durch die Vorspannung verschoben werden und daß beide Prismen zu einer besonders guten Anlage des Schneidplattenträgers gegen die Nut beitragen.

Eine günstige Ausbildung ist auch dadurch gegeben, daß die Keilprismenanordung in einer radial nach innen geöffneten Nut des Schneidplattenträgers angeordnet ist. Es ist somit nicht erforderlich, die Größe der Nut im Grundkörper wegen der Keilprismenanordnung zu verändern, so daß auch bekannte Messerköpfe bei einem Austausch der Schneidplattenträger mit der erfindungsgemäßen Keilprismenanordnung nachgerüstet werden können. Weiterhin wird in vorteilhafter Weise sichergstellt, daß die Keilprismenanordnung bei der Montage des Messerkopfes in voreingestelltem Zustand zusammen mit dem Schneidplattenträger eingesetzt werden kann. Dies führt zum einen zu einer Reduzierung der erforderlichen Zusammenbauzeit und damit der hierfür erforderlichen Kosten, zum anderen wird vermieden, daß durch unsachgemäßes Einsetzen der Keilprismenanordnung ein funktionssicherer Betrieb des Messerkopfes verhindert werden könnte.

Es erweist sich weiterhin insbesondere als vorteilhaft, daß das erste Prisma gleichseitig ausgebildet ist und/oder daß das erste Prisma mit seinen Spitzenflächen einen Winkel von 90 ° einschließt. Diese Ausgestaltung führt zu einer gleichmäßigen Kraftübertragung auf das zweite und dritte Prisma und ermöglicht zudem eine kostengünstige Herstellung der Prismenanordnung.

In günstiger Weise ist auch die Berührungsfläche des zweiten und dritten Prismas mit dem ersten Prisma um einen größeren Winkel zum radial innen liegenden Bodenbereich der Nut geneigt, als die Berührungsfläche zum Schneidplattenträger. Dies führt bei einer Verschiebung des zweiten und dritten Prismas während des Vorspannvorganges durch Einwirkung des ersten Prismas zum einen zu einer günstigen Kraftverteilung und zum anderen zu besonders günstigen Verschiebewegen der drei Prismen untereinander und des zweiten und dritten Prismas relativ zu dem Schneidplattenträger, da eine relativ große Verschiebung des ersten Prismas nur zu einer relativ geringen seitlichen Verschiebung des zweiten und des dritten Prismas führt.

Eine günstige Ausgestaltung des Messerkopfes ist ferner dadurch gegeben, daß der Radialverstellkeil mittels einer Differentialschraube, welche im Radialverstellkeil und im Grundkörper gelagert ist, verstellbar ist, wobei die Achse der Differentialschraube gegen die Drehachse des Grundkörpers geneigt ist und parallel zur radial außen liegenden Kante des Radialverstellkeils verläuft. Mittels der Differentialschraube ist es möglich, den Radialverstellkeil in vorbestimmter Weise in den Grundkörper hineinzuschieben und aus diesem herauszuziehen. Durch die Zuordnung der Drehachse der Differentialschraube zu der obenbeschriebenen Kante des Radialverstellkeils wird erreicht, daß die zum Bewegen des Radialverstellkeil selbst erforderlichen Kräfte möglichst gering sind, da an der zur Verstellung wirksamen Kante des Keils keine Seitenkräfte, sondern nur Kräfte in Längsrichtung der Differentialschraube aufgebracht werden müssen.

Eine weitere vorteilhafte Weiterbildung des erfindungsgemäßen Messerkopfes ist auch dadurch gegeben, daß die Schneidplatte an einem am Schneidplattnträger gelagerten Schneidplattenkäfig gelagert ist. Auf diese Weise ist es möglich, die Schneidkante oder die Schneidkanten der Schneidplatte nicht nur mittels der Radial- und Axialverstellkeile einzustellen, es ist vielmehr auch eine Verdrehung der Schneidplatte möglich, welche zu einer Feineinstellung erforderlich werden kann.

Der erfindungsgemäße Messerkopf ist in besonders vorteilhafter Weise zur Aufnahme großer Radial-Zerspanungskräfte geeignet und kann somit für eine Schwerzerspanung eingesetzt werden. Durch die erfindungsgemäße Ausgestaltung und Funktion des Spannkeiles wird sichergestellt, daß der Schneidplattenträger sowohl in radialer als auch in axialer Richtung in besonders betriebssicherer Weise verspannt werden kann. Durch die Keilprismenanordnung wird weiterhin in besonders vorteilhafter Weise sichergestellt, daß auch große Radialkräfte, welche insbesondere bei der Schwerzerspanung auftreten können, ohne eine Verstellung des Schneidplattenträgers bzw. der an ihm gelagerten Schneidplatte auf den Grundkörper übergeleitet werden können.

Im folgenden wird die Erfindung anhand von Ausführungsbeispielen in Verbindung mit der Zeichnung beschrieben. Dabei zeigt:

Fig. 1     einen Teil einer Unteransicht des erfindungsgemäßen Messerkopfes,

Fig. 2     eine Teilansicht auf den seitlichen Außenumfangsbereich des Messerkopfes von Fig. 1,

Fig. 3     einen Schnitt entlang der Linie A-A von Fig. 2,

Fig. 4     eine Explosionsdarstellung eines ersten Ausführungsbeispieles der Erfindung,

Fig. 5     eine Explosionsdarstellung eines zweiten Ausführungsbeispieles der Erfindung und

Fig. 6     eine Explosionsdarstellung eines dritten Ausführungsbeispieles.

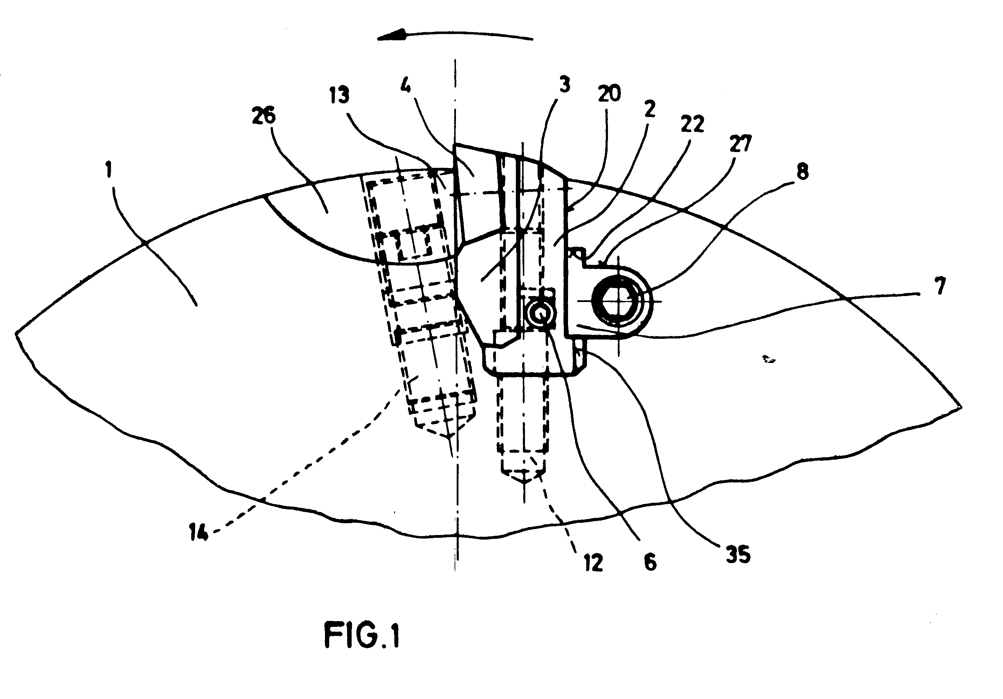

Der in Fig. 1 in der Unteransicht dargestellte Messerkopf weist einen Grundkörper 1 auf, welcher im wesentlichen zylindrisch ausgebildet ist und mit mehreren Nuten 20 versehen ist, welche sich zur Stirnseite des Grundkörpers 1 und zu seiner Außenumfangsfläche hin öffnen. Die axiale Erstreckung der jeweiligen Nuten 20 ist geringer, als die Dicke des Grundkörpers 1. Die Drehrichtung des Messerkopfes ist in Fig. 1 mit einem Pfeil dargestellt, sie erfolgt in Gegenuhrzeigerrichtung. In jeder der Nuten 20, von denen in Fig. 1 zur Vereinfachung der Darstellung nur eine abgebildet ist, ist ein Schneidplattenträger 2 eingesetzt, an welchem, wie anschließend noch beschrieben werden wird, ein Schneidplattenkäfig 3 gelagert ist, welcher wiederum eine Schneidplatte 4 lagert. An dem in Drehrichtung rückliegenden Bereich der Nut 20 ist eine Ausnehmung 27 vorgesehen, in welcher ein Radialverstellkeil 7 angeordnet ist, der mittels einer Differentialschraube 8, welche sowohl im Grundkörper 1 als auch in dem Radialverstellkeil 7 geführt ist, verstellbar ist. In Umfangsdrehrichtung vor der Schneidplatte 4 ist eine Ausnehmung 26 vorgesehen, welche im wesentlichen der Abfuhr der erzeugten Späne dient.

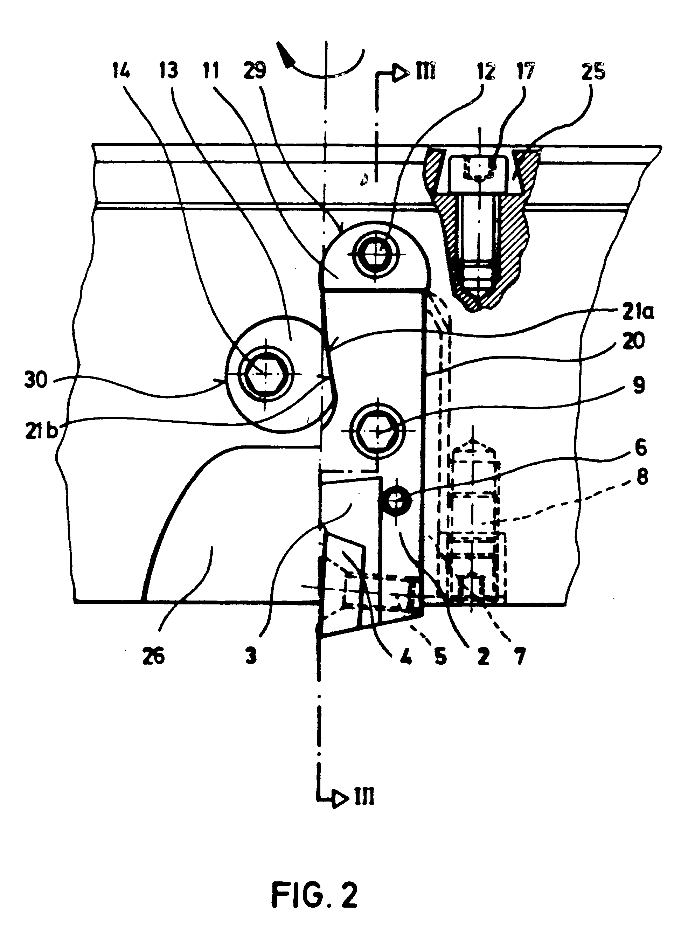

Fig. 2 zeigt eine Seitenansicht des erfindungsgemäßen Messerkopfes von Fig. 1, wobei der Übersichtlichkeit halber nur ein geringer Umfangsbereich des Messerkopfes dargestellt ist. Wie ebenfalls durch einen Pfeil dargestellt, erfolgt bei einer Drehung des Grundkörpers um seine Zentralachse eine Bewegung der Schneidplatte 4 nach links.

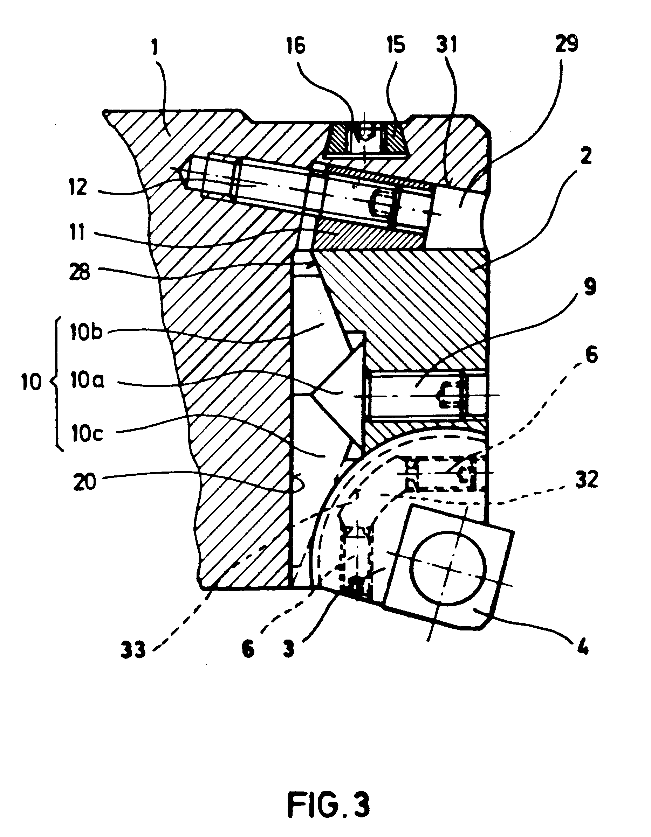

Die Schneidplatte 4 ist, wie anschließend noch im einzelnen erläutert werden wird, an dem Schneidplattenträger 2 und an dem Schneidplattenkäfig 3 mittels einer Befestigungsschraube 5 befestigt. In Fig. 2 ist weiterhin deutlich zu sehen, daß die axiale Längserstreckung der Nut 20 geringer ist, als die axiale Dicke des Grundkörpers 1. An dem axial rückliegenden Bereich der Nut 20 ist eine Ausnehmung 29 vorgesehen, in welcher ein Axialverstellkeil 11 angeordnet ist. Wie in Zusammenhang mit Fig. 3 im einzelnen beschrieben werden wird, ist der Axialverstellkeil 11 mittels einer Differentialschraube 12 in radialer Richtung verstellbar.

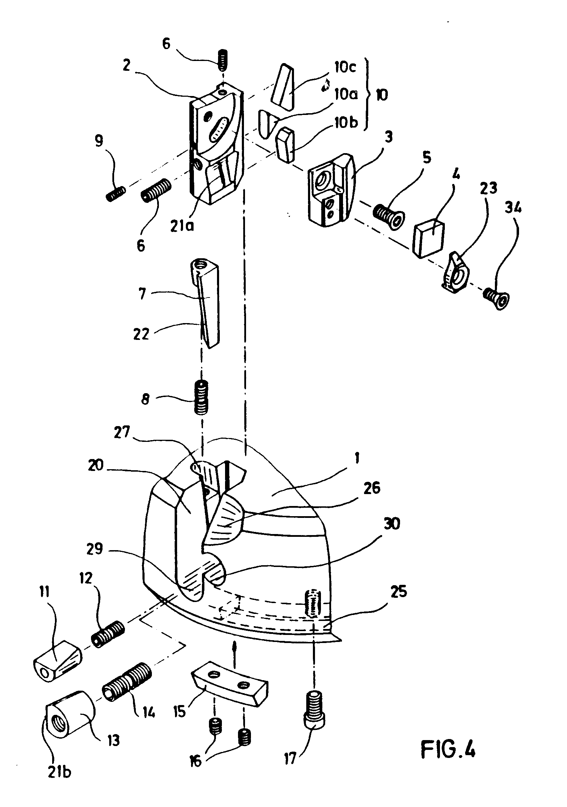

In Umfangsdrehrichtung vor dem Schneidplattenträger 2 ist eine mit der Nut 20 in Verbindung stehende Ausnehmung 30 vorgesehen, in welcher ein Spannkeil 13 angeordnet ist, der mittels einer Differentialschraube 14 in radialer Richtung bewegbar ist. Der Spannkeil 13 weist eine Kontaktfläche 21b auf, welche mit einer Kontaktfläche 21a des Schneidplattenträgers 2 in Eingriff bringbar ist. Wie im Zusammenhang mit den Figuren 4 bis 6 im einzelnen erläutert werden wird, ist der Spannkeil 13 kegelstumpfförmig ausgebildet. Die Kontaktfläche 21b ist, bezogen auf die Längsachse der Differentialschraube 14, keilförmig angeordnet. Wie in den Figuren 4 bis 6 dargestellt, ist die Kontaktfläche 21a des Schneidplattenträgers 2 so geneigt angeordnet, daß der Verlauf der Kontaktfläche 21a von dem axial zurückliegenden Teil zu dem axial vorliegenden Teil dermaßen geneigt ist, daß der axial vorne liegende Teil in Richtung auf die in Drehachsrichtung des Grundkörpers 1 verlaufende Mittenebene des Schneidplattenträgers 2 hin versetzt ist. Weiterhin ist die Kontaktfläche 21a des Schneidplattenträgers 2 so angeordnet, daß sie an dem radial außen liegenden Bereich des Schneidplattenträgers 2 weiter zu dessen in Drehachsrichtung des Grundkörpers 1 verlaufenden Mittenebene angeordnet ist, als an ihrem radial weiter innen liegenden Bereich. Die Kontaktfläche 21a ist somit, bezüglich der Zentralachse des Grundkörpers 1, räumlich geneigt angeordnet.

Die Kontaktfläche 21a kann in besonders vorteilhafter Weise, wie in den Figuren 4 bis 6 dargestellt, derart ausgestaltet sein, daß eine im wesentlichen streifenförmige Erhöhung vorgesehen ist, welche um einen geringfügigen Betrag gegenüber dem Rest der Kontaktfläche 21a erhöht ist und welche mit dem Spannkeil 13 in Anlage kommt. Die Erhöhung der Kontaktfläche 21a ist streifenförmig im wesentlichen parallel zu der radial außen liegenden Kante der Kontaktfläche 21a an dem Schneidplattenträger 2 ausgebildet. Die Breite des streifenförmigen Bereiches kann je nach den erforderlichen Gegebenheiten unterschiedlich gewählt werden. Eine derartige, eine streifenförmige Erhöhung aufweisende Kontaktfläche 21a erweist sich im Rahmen der Erfindung insbesondere dadurch als vorteilhaft, daß eine Erweiterung der Nut 20, in welcher der Schneidplattenträger 2 angeordnet ist, beim Anziehen des Spannkeils 13 verhindert wird, da die Flächenpressung zwischen dem Spannkeil 13 und dem streifenförmigen erhabenen Bereich der Kontaktfläche 21a wesentlich verbessert ist.

Fig. 2 zeigt weiterhin in gestrichelter Darstellung den Radialverstellkeil 7 sowie die zu seiner Verstellung dienende Differentialschraube 8. Weiterhin ist in Fig. 2 eine von zwei Einstellschrauben 6 dargestellt, mit deren Hilfe der Schneidplattenkäfig 3 relativ zu dem Schneidplattenträger 2 verschwenkbar ist. Im zentralen Bereich des Schneidplattenträgers 2 ist eine Spannschraube 9 vorgesehen, welche, wie nachfolgend im Zusammenhang mit Fig. 3 beschrieben werden wird, der Vorspannung der Keilprismenanordnung dient. Weiterhin zeigt Fig. 2, teilweise im Schnitt und um 90 ° versetzt, eine Nut 25, welche im Randbereich des Grundkörpers 1 ringförmig umlaufend ausgebildet ist, und in welcher mehrere, im einzelnen in Fig. 3 dargestellte Auswuchtkörper 15 angeordnet sind. Die zum Einführen der Auswuchtkörper 15 erforderliche Vergrößerung der Nut 25 wird mittels einer in Fig. 2 dargestellten Sperrschraube 17 verschlossen.

Fig. 3 zeigt einen Schnitt entlang der Linie A-A von Fig. 2. Es ist deutlich zu sehen, daß die Nut 20 sich nur über einen Teilbereich der axialen Dicke des Grundkörpers 1 erstreckt. An dem axial weiter hinten liegenden Ende ist die Ausnehmung 29 dargestellt, in welcher der Axialverstellkeil 11 angeordnet ist. Die Trennfläche zwischen dem Axialverstellkeil 11 und dem Schneidplattenträger 2 ist in Form einer zur Zentralachse des Grundkörpers 1 senkrechten Ebene ausgebildet, so daß der Schneidplattenträger 2 in radialer Richtung, d. h. in Fig. 3 nach rechts, verschiebbar ist, ohne daß der Axialverstellkeil 11 betätigt werden muß. Der Axialverstellkeil 11 wird mittels der Differentialschraube 12 in im wesentlichen radialer Richtung verschoben. Durch Zusammenwirken des Axialverstellkeils 11 mit der eben beschriebenen Ebene des Schneidplattenträgers 2 und der Wandung 31 der Ausnehmung 29 führt eine im wesentlichen radiale Verschiebung des Axialverstellkeils zu einer Axialverschiebung des Schneidplattenträgers. Durch die Differentialschraube 12, welche sowohl in einem

Gewinde des Axialverstellkeils 11 als auch in einem Gewinde des Grundkörpers 1 geführt ist, ist es möglich, den Axialverstellkeil 11 in gezielter Weise in beiden Richtungen zu verschieben.

Fig. 3 zeigt weiterhin einen Längsschnitt durch den Schneidplattenträger 2, welcher in seinem radial innen liegenden Endbereich mit einer Nut 28 versehen ist, in welcher eine Keilprismenanordnung 10 angeordnet ist. Diese besteht aus einem ersten Prisma 10a, welches mit seinem Bodenbereich radial nach außen angeordnet ist und mit seinem Spitzenbereich in Richtung auf die Zentralachse des Grundkörpers weist. Weiterhin sind ein zweites Prisma 10b und ein drittes Prisma 10c vorgesehen, welche ebenfalls in der Nut 28 angeordnet sind und sich in Anlage sowohl an das erste Prisma 10a als auch an den Schneidplattenträger 2 und die radial innen liegende Wandung der Nut 20 befinden. Mittels der in einem Gewinde des Schneidplattenträgers 2 geführten Spannschraube 9 ist das erste Prisma 10a in Richtung auf das zweite und das dritte Prisma vorspannbar, so daß beim Hineindrehen der Spannschraube 9 eine radial nach außen wirkende Kraft auf den Schneidplattenträger 2 aufgebracht wird. Durch die Keilprismenanordnung 10 wird erreicht, daß der Schneidplattenträger 2 sich mit seinem radial innen liegenden Endbereich stets in satter, vorgespannter Anlage an der Wandung der Nut 20 befindet. Dies führt, ebenso wie die Einwirkung des Spannkeils 13 zu einer Vorspannung des Schneidplattenträgers 2, wodurch Aufweitungen und Lockerungen unter dem Einfluß der bei hohen Drehgeschwindigkeiten des Grundkörpers 1 auftretenden Zentrifugalkraft vorgebeugt wird.

Fig. 3 zeigt weiterhin, daß der Spitzenwinkel des ersten Prismas 10a im wesentlichen 90 ° beträgt, während der Winkel zwischen dem radial innen liegenden Bereich der Nut 20 und den den Schneidplattenträger 2 berührenden Flächen des zweiten und des dritten Prismas spitzwinklig ausgebildet sind.

In Fig. 3 ist weiterhin der Schneidplattenkäfig 3 in Seitenansicht dargestellt, welcher mittels der beiden Einstellschrauben 6 um eine Achse verschwenkbar ist, welche im wesentlichen der Drehachse der Befestigungsschraube 5 für die Schneidplatte 4 entspricht. Die beiden Einstellschrauben 6 sind, wie in den Fig. 4 bis 6 im einzelnen dargestellt, in Gewindeausnehmungen des Schneidplattenträgers 2 geführt und befinden sich mit ihrem innen liegenden Endbereich in Anlage an einem Anschlag 32 des Schneidplattenkäfigs 3, der in einer im wesentlichen bogenförmigen Ausnehmung 33 des Schneidplattenträgers 2 verschwenkbar aufgenommen ist. Durch eine wechselseitige Betätigung der Einstellschrauben 6 erfolgt somit eine Verschwenkung des Schneidplattenkäfigs 3 relativ zu dem Schneidplattenträger 2.

Fig. 4 zeigt eine Explosionsdarstellung eines Ausführungsbeispieles des erfindungsgemäßen Messerkopfes. Die in der Explosionsdarstellung abgebildeten Einzelteile des Messerkopfes entsprechen bis auf die Befestigung der Schneidplatte 4 an dem Schneidplattenkäfig 3 den in den Figuren 1 bis 3 beschriebenen Teilen. Dabei ergibt sich aus Fig. 4 insbesondere besonders deutlich die Ausgestaltung des Axialverstellkeils 11, des Spannkeils 13 sowie des Radialverstellkeils 7. Dieser weist eine radial innen liegende Kante auf, die parallel zur Zentralachse des Grundkörpers 1 angeordnet ist und sich in Anlage an einem Ansatz 35 des Schneidplattenträgers 2 befindet, welcher ebenfalls parallel zur Zentralachse des Grundkörpers 1 angeordnet ist. Eine radial außen liegende Kante 22 des Radialverstellkeils 7 befindet sich in Anlage an einer Kante der Ausnehmung 27, so daß bei einer Axialverschiebung des Radialverstellkeils 7 der Schneidplattenträger 2 in radialer Richtung bewegbar ist. Die zur Bewegung des Radialverstellkeils 7 dienende Differentialschraube 8 ist mit ihrer Drehachse im wesentlichen parallel zu der Kante 22 angeordnet.

Bei dem in Fig. 4 gezeigten Ausführungsbeispiel ist der Schneidplattenkäfig 3 mittels der Befestigungsschraube 5 an dem Schneidplattenträger 2 gelagert. Die Schneidplatte 4 ist an dem Schneidplattenkäfig 3 mittels eines Spannhebels 23 befestigt, der mittels einer Schraube 34 an dem Schneidplattenkäfig 3 gelagert ist.

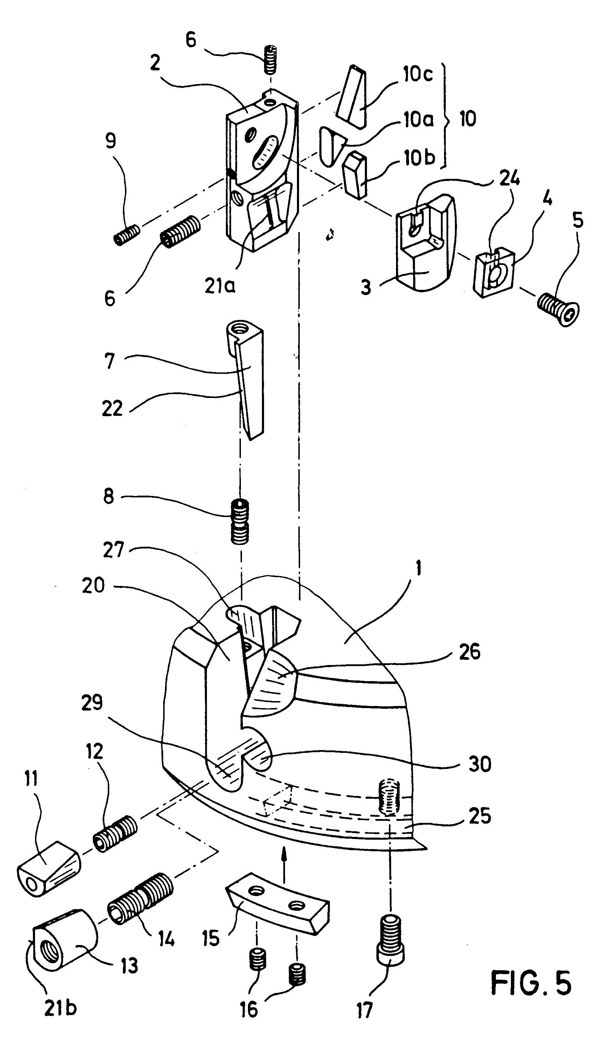

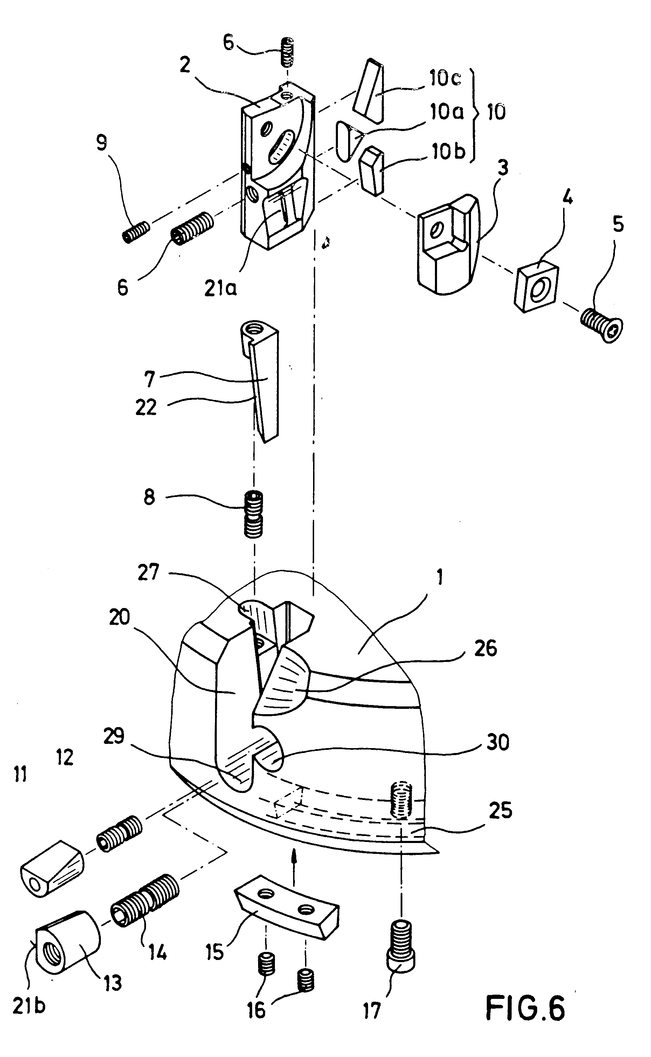

Die in den Figuren 5 und 6 gezeigten Ausführungsbeispiele unterscheiden sich von dem Ausführungsbeispiel gemäß Fig. 4 lediglich in der Befestigung der Schneidplatte 4 an dem Schneidplattenkäfig 3. Bei dem in Fig. 5 dargestellten Ausführungsbeispiel ist sowohl der Schneidplattenkäfig 3 als auch die Schneidplatte 4 mit einer Nut-Federverbindung 24 versehen, mittels derer die Schneidplatte 4 in besonders wirkungsvoller Weise an dem Schneidplattenkäfig 3 gegen Verdrehung gesichert werden kann. Die Befestigung der Schneidplatte 4 erfolgt bei diesem Ausführungsbeispiel mittels der Befestigungsschraube 5, welche auch der Lagerung des Schneidplattenkäfigs 3 an dem Schneidplattenträger 2 dient. Es ist selbstverständlich, daß, ähnlich wie in dem in Fig. 4 gezeigten Ausführungsbeispiel, nach einer Verschwenkung des Schneidplattenkäfigs 3 relativ zu dem Schneidplattenträger 2 die Befestigungsschraube 5 festgezogen werden muß, ohne deren Lockerung eine Betätigung der Einstellschrauben 6 nicht möglich ist. Bei dem in Fig. 6 dargestellten Ausführungsbeispiel wurde auf die in Fig. 5 gezeigte Nut-Federverbindung 24 verzichtet.

In den Figuren 4 bis 6 ist jeweils ein Auswuchtkörper 15 dargestellt, welcher in der Nut 25 verschiebbar geführt ist. Zum Zwecke der Auswuchtung des Messerkopfes erfolgt eine Verschiebung des Auswuchtkörpers 15, welcher in seiner jeweiligen Lage mittels der Befestigungsschrauben 16 fixierbar ist.

Die Erfindung ist nicht auf die gezeigten und beschriebenen Ausführungsbeispiele beschränkt. Vielmehr ist es im Rahmen der Patentansprüche möglich, sowohl die erfindungsgemäße Spannkeilanordnung als auch die erfindungsgemäße Keilprismenanordnung bei Messerköpfen zu verwenden, deren radiale und/oder axiale Einstellung der jeweiligen Schneidplatten oder Schneidkörper in anderer Weise als in der beschriebenen Weise erfolgt. Auch ist die Erfindung nicht auf die beschriebene Ausgestaltung des Spannkeils und der zugehörigen Kontaktfläche des Schneidplattenträgers beschränkt, es ist vielmehr auch möglich, den Spannkeil anders anzuordnen und die Kontaktflächen zwischen dem Spannkeil und dem Schneidplattenträger im Rahmen der Patentansprüche zu modifizieren. Auch ist die Keilprismenanordnung nicht auf die gezeigte Ausführungsform beschränkt, es ist im Rahmen der Patentansprüche auch möglich, zusätzliche Prismen vorzusehen oder die Keilprismenanordnung an anderer Stelle oder in einer anderen winkelmäßigen Orientierung vorzusehen.

**Patentansprüche**

1. Messerkopf mit einem im wesentlichen zylindrischen Grundkörper (1), welcher an seinem Umfangsbereich mit mehreren zur Stirnseite und zu einem Teil der Außenumfangsfläche geöffneten Nuten (20) versehen ist, in welchen jeweils ein mit einer Schneidplatte (4) versehener Schneidplattenträger (2) angeordnet ist, wobei in Umfangsdrehrichtung hinter dem Schneidplattenträger (2) ein axial verschiebbarer, mit seinen Wirkflächen gegen den Schneidplattenträger (2) und gegen den Grundkörper (1) anliegender Radialverstellkeil (7) vorgesehen ist, sowie ein axial hinter dem Schneidplattenträger (2) angeordneter, in radialer Richtung mittels einer Differentialschraube (12) verschiebbarer Axialverstellkeil (11), wobei in Umfangsdrehrichtung vor dem Schneidplattenträger (2) ein radial verstellbarer Spannkeil (13) vorgesehen ist, und der Spannkeil (13) und der Schneidplattenträger (2) miteinander zur Anlage bringbare Kontaktflächen (21a, 21b) aufweisen, welche zum Verspannen des Schneidplattenträgers (2) in Richtung des in Drehrichtung hinten liegenden Bereichs der Nut (20) dienen, **dadurch gekennzeichnet,** daß die Kontaktflächen (21a, 21b) zum Verspannen des Schneidplattenträgers (2) auch in Richtung des axial hinten liegenden und radial innen liegenden Bereichs der Nut (20) dienen, und daß die Kontaktflächen (21a, 21b) gegen eine die Drehachse des Grundkörpers (1) aufweisende und im Bereich der Nut (20) verlaufende Ebene geneigt sind und deren jeweils in Richtung auf die Zentralachse des Grundkörpers (1) gedachte Verlängerung von dieser durchstoßen wird.

2. Messerkopf mit einem im wesentlichen zylindrischen Grundkörper (1), welcher an seinem Umfangsbereich mit mehreren zur Stirnseite und zu einem Teil der Außenumfangsfläche geöffneten Nuten (20) versehen ist, in welchen jeweils ein mit einer Schneidplatte (4) versehener Schneidplattenträger (2) angeordnet ist, wobei in Umfangsdrehrichtung hinter dem Schneidplattenträger (2) ein axial verschiebbarer, mit seinen Wirkflächen gegen den Schneidplattenträger (2) und gegen den Grundkörper (1) anliegender Radialverstellkeil (7) vorgesehen ist, sowie ein axial hinter dem Schneidplattenträger (2) angeordneter, in radialer Richtung mittels einer Differentialschraube (12) verschiebbarer Axialverstellkeil (11), wobei in Umfangsdrehrichtung vor dem Schneidplattenträger (2) ein radial verstellbarer Spannkeil (13) vorgesehen ist, und der Spannkeil (13) und der Schneidplattenträger (2) miteinander zur Anlage bringbare Kontaktflächen (21a,21b) aufweisen, welche zum Spannen des Schneidplattenträgers (2) in Richtung des axial hinten liegenden, radial innen liegenden in Drehrichtung hinten liegenden Bereichs der Nut (20) dienen, **dadurch gekennzeichnet,** daß bezüglich des Grundkörpers (1) in radialer Richtung nach innen hinter dem Schneidplattenträger (2) in der Nut (20) eine verspannbare Keilprismenanordnung (10) vorgesehen ist, mit der eine im wesentlichen radial wirkende Verspannung auf den Schneidplattenträger (2) aufbringbar ist.

3. Messerkopf nach Anspruch 1 oder 2, **dadurch gekennzeichnet,** daß sowohl der Spannkeil (13) als auch die Keilprismenanordnung (10) vorgesehen sind.

4. Messerkopf nach einem der Ansprüche 1 bis 3, **dadurch gekennzeichnet,** daß die Kontaktflächen (21a,21b) zwischen dem Spannkeil (13) und dem Schneidplattenträger (2) eben ausgestaltet sind.

5. Messerkopf nach einem der Ansprüche 1 bis 3, **dadurch gekennzeichnet,** daß eine der Kontaktflächen (21a) des Schneidplattenträgers (2) eine im wesentlichen streifenförmige Erhöhung aufweist.

6. Messerkopf nach einem der Ansprüche 1 bis 5, **dadurch gekennzeichnet,** daß der Spannkeil (13) im wesentlichen kegelstumpfförmig, zum radial innen liegenden Bereich hin verjüngend ausgebildet ist und daß er mittels einer exzentrisch angeordneten Differentialschraube (14) relativ zum Grundkörper (1) verstellbar ist und eine ebene, keilförmig angeordnete, die Kontaktfläche (21b) bildende Abflachung zur Anlage an den Schneidplattenträger (2) umfaßt.

7. Messerkopf nach einem der Ansprüche 1 bis 6, dadurch gekennzeichnet, daß die Kontaktfläche (21a) des Schneidplattenträgers (2) sich von einem in Umfangsrichtung rückliegenden, in Axialrichtung hinten liegenden Bereich zu einem in Umfangsrichtung weiter vorne liegenden, in Axialrichtung vorne liegenden Bereich erstreckt.

8. Messerkopf nach einem der Ansprüche 2 bis 7, dadurch gekennzeichnet, daß die Keilprismenanordnung (10) drei Prismen (10a, 10b, 10c) umfaßt, wobei ein erstes Prisma (10a) mit seinem Spitzenbereich radial nach innen weisend, mit seiner Grundfläche dem Schneidplattenträger (2) zugewandt angeordnet ist und wobei ein zweites und ein drittes Prisma (10b, 10c) mit ihren Grundflächen gegen einen radial innen liegenden Bodenbereich der Nut (20) anliegen und wobei das zweite und das dritte Prisma (10b, 10c) sich weiterhin in Anlage an das erste Prisma (10a und den Schneidplattenträger (2) befinden, und daß die Vorspannung der Keilprismenanordnung (10) mittels einer im Schneidpattenträger (2) gelagerten, auf das erste Prisma (10a) einwirkenden Spannschraube (9) erfolgt.

9. Messerkopf nach einem der Ansprüche 2 bis 8, dadurch gekennzeichnet, daß die Keilprismenanordnung (10) in einer radial nach innen geöffneten Nut des Schneidplattenträgers (2) angeordnet ist.

10. Messerkopf nach einem der Ansprüche 8 oder 9, dadurch gekennzeichnet, daß das erste Prisma (10a) gleichseitig ausgebildet ist.

11. Messerkopf noch einem der Ansprüche 8 bis 10, dadurch gekennzeichnet, daß das erste Prisma (10a) mit seinen Spitzenflächen einen Winkel von 90° einschließt.

12. Messerkopf nach einem der Ansprüche 8 bis 11, dadurch gekennzeichnet, daß die Berührungsfläche des zweiten und dritten Prismas (10b, 10c) mit dem ersten Prisma (10a) um einen größeren Winkel zum radial innen liegenden Bodenbereich der Nut (20) geneigt ist, als die Berührungsfläche zum Schneidplattenträger (2).

13. Messerkopf nach einem der Ansprüche 1 bis 12, dadurch gekennzeichnet, daß der Radialverstellkeil (7) mittels einer Differentialschraube (8), welche im Radialverstellkeil (7) und im Grundkörper (1) drehbar gelagert ist, verstellbar ist, wobei die Achse der Differentialschraube (8) gegen die Drehachse des Grundkörpers (1) geneigt ist und parallel zur radial außen liegenden Kante (22) des Radialverstellkeils (7) verläuft.

14. Messerkopf nach einem der Ansprüche 1 bis 13, dadurch gekennzeichnet, daß die Schneidplatte (4) an einem am Schneidplattenträger (2) gelagerten Schneidplattenkäfig (3) gelagert ist.

15. Messerkopf nach Anspruch 14, dadurch gekennzeichnet, daß der Schneidplattenkäfig (3) und die Schneidplatte (4) mittels einer Befestigungsschraube (5) am Schneidplattenträger (2) gelagert und gemeinsam um die Drehachse der Befestigungsschraube (5) verschwenkbar sind.

16. Messerkopf nach Anspruch 15, dadurch gekennzeichnet, daß die Schneidplatte (4) und der Schneidplattenkäfig (3) formschlüssige Eingriffselemente aufweisen.

17. Messerkopf nach Anspruch 16, dadurch gekennzeichnet, daß die formschlüssigen Eingriffselemente in Form einer Nut- und Federverbindung (24) ausgebildet sind.

18. Messerkopf nach einem der Ansprüche 1 bis 13, dadurch gekennzeichnet, daß der Schneidplattenkäfig (3) mittels einer Befestigungsschraube (5) am Schneidplattenträger (2) gelagert ist und daß die Schneidplatte (4) mittels eines am Schneidplattenkäfig (3) gelagerten Spannhebels (23) befestigbar ist, wobei der Schneidplattenkäfig (3) um die Drehachse der Befestigungsschraube (5) verschwenkbar ist.

19. Messerkopf nach einem der Ansprüche 15 bis 18 , dadurch gekennzeichnet, daß die Schwenkbewegung des Schneidplattenkäfigs (3) mittels zweier am Schneidplattenträger (2) gelagerter, mit einem Ansatz des Schneidplattenkäfigs (3) in Einwirkung bringbarer Schrauben (6) hervorrufbar ist.

20. Messerkopf nach einem der Ansprüche 1 bis 19 , dadurch gekennzeichnet, daß der Grundkörper (1) zumindest eine Nut (25) zur verschiebbaren Aufnahme von Auswuchtkörpern (15) aufweist.

**Claims**

1. Cutter head with an essentially cylindrical main body (1) which is provided in its circumferential region with several grooves (20) which open towards the end face and a portion of the outer circumferential surface and in each of which is arranged a cutting plate support (2) provided with a cutting plate (4), wherein in the circumferential direction of rotation behind the cutting plate support (2) is provided an axially displaceable radial adjusting wedge (7) which abuts by its working faces against the cutting plate support (2) and against the main body (1), as well as an axial adjusting wedge (11) mounted axially behind the cutting plate support (2) and displaceable in a radial direction by means of a differential screw (12), and wherein in the circumferential direction of rotation in front of the cutting plate support (2) is provided a radially adjustable tensioning wedge (13), and the tensioning wedge (13) and the cutting plate support (2) comprise contact faces (21a, 21b) which can be brought into abutment with each other and which serve to lock the cutting plate support (2) in the direction of the region of the groove (20) which is rearward in the direction of rotation, characterised in that the contact faces (21a, 21b) serve to lock the cutting plate support (2) also in the direction of the axially rearward and radially inward regions of the groove (20), and that the contact faces (21a, 21b) are inclined at an angle to a plane comprising the axis of rotation of the main body (1) and extending in the region of the groove (20) and their imaginary extension respectively in a direction towards the central axis of the main body (1) is traversed thereby.

2. Cutter head with an essentially cylindrical main body (1) which is provided in its circumferential region with several grooves (20) which open towards the end face and a portion of the outer circumferential surface and in each of which is arranged a cutting plate support (2) provided with a cutting plate (4), wherein in the circumferential direction of rotation behind the cutting plate support (2) is provided an axially displaceable radial adjusting wedge (7) which abuts by its working faces against the cutting plate support (2) and against the main body (1), as well as an axial adjusting wedge (11) mounted axially behind the cutting plate support (2) and displaceable in a radial direction by means of a differential screw (12), wherein in the circumferential direction of rotation in front of the cutting plate support (2) is provided a radially adjustable tensioning wedge (13), and the tensioning wedge (13) and the cutting plate support (2) comprise contact faces (21a, 21b) which can be brought into abutment with each other and which serve to tension the cutting plate support (2) in the direction of the region of the groove (20) which is axially rearward, radially inward and, in the direction of rotation, rearward, characterised in that in relation to the main body (1) in a radial inward direction behind the cutting plate support (2) in the groove (20) is provided & lockable wedge prism arrangement (10) by which essentially radially acting locking can be applied to the cutting plate support (2).

3. Cutter head according to claim 1 or 2, characterised in that both the tensioning wedge (13) and the wedge prism arrangement (10) are provided.

4. Cutter head according to any of claims 1 to 3, characterised in that the contact faces (21a, 21b) between the tensioning wedge (13) and the cutting plate support (2) are of flat construction.

5. Cutter head according to any of claims 1 to 3, characterised in that one of the contact faces (21a) of the cutting plate support (2) comprises an essentially strip-shaped raised portion.

6. Cutter head according to any of claims 1 to 5, characterised in that the tensioning wedge (13) is essentially frustoconical, tapering towards the radially inward region, and that it is adjustable relative to the main body (1) by means of an eccentrically arranged differential screw (14) and includes a plane, flattened portion arranged in a wedge shape and forming the contact face (21b) for abutment against the cutting plate support (2).

7. Cutter head according to any of claims 1 to 6, characterised in that the contact face (21a) of the cutting plate support (2) extends from a region which is rearward in the circumferential direction and rearward in the axial direction, to a region which is further forward in the circumferential direction and forward in the axial direction.

rection.

8. Cutter head according to any of claims 2 to 7, characterised in that the wedge prism arrangement (10) includes three prisms (10a, 10b, 10c), wherein a first prism (10a) is arranged with its apical region pointing radially inwards, with its base facing towards the cutting plate support (2) and wherein second and third prisms (10b, 10c) abut by their bases against a radially inward bottom region of the groove (20) and wherein the second and third prisms (10b, 10c) are furthermore in abutment with the first prism (10a) and the cutting plate support (2) and that biassing of the wedge prism arrangement (10) takes place by means of a tensioning screw (9) mounted in the cutting plate support (2) and acting on the first prism (10a).

9. Cutter head according to any of claims 2 to 8, characterised in that the wedge prism arrangement (10) is arranged in a radially inwardly open groove of the cutting plate support (2).

10. Cutter head according to either of claims 8 or 9, characterised in that the first prism (10a) is constructed with equal sides.

11. Cutter head according to any of claims 8 to 10, characterised in that the first prism (10a) forms with its apical faces an angle of 90°.

12. Cutter head according to any of claims 8 to 11, characterised in that the contact face of the second and third prisms (10b, 10c) with the first prism (10a) is inclined at a greater angle to the radially inward bottom region of the groove (20) than the contact face with the cutting plate support (2).

13. Cutter head according to any of claims 1 to 12, characterised in that the radial adjusting wedge (7) is adjustable by means of a differential screw (8) which is mounted rotatably in the radial adjusting wedge (7) and in the main body (1), wherein the axis of the differential screw (8) is inclined at an angle to the axis of rotation of the main body (1) and extends parallel to the radially outward edge (22) of the radial adjusting wedge (7).

14. Cutter head according to any of claims 1 to 13, characterised in that the cutting plate (4) is mounted on a cutting plate cage (3) mounted on the cutting plate support (2).

15. Cutter head according to claim 14, characterised in that the cutting plate cage (3) and the cutting plate (4) are mounted on the cutting plate support (2) by means of a fastening screw (5) and pivotable together about the axis of rotation of the fastening screw (5).

16. Cutter head according to claim 15, characterised in that the cutting plate (4) and the cutting plate cage (3) comprise form-locking engaging elements.

17. Cutter head according to claim 16, characterised in that the form-locking engaging elements are constructed in the form of a tongue and groove connection (24).

18. Cutter head according to any of claims 1 to 13, characterised in that the cutting plate cage (3) is mounted on the cutting plate support (2) by means of a fastening screw (5) and that the cutting plate (4) can be attached by means of a tensioning lever (23) mounted on the cutting plate cage (3), wherein the cutting plate cage (3) is pivotable about the axis of rotation of the fastening screw (5).

19. Cutter head according to any of claims 15 to 18, characterised in that the pivot movement of the cutting plate cage (3) can be brought about by means of two screws (6) which are mounted on the cutting plate support (2) and which can be brought into operation with an attachment of the cutting plate cage (3).

20. Cutter head according to any of claims 1 to 19, characterised in that the main body (1) comprises at least one groove (25) for displaceably holding balancing bodies (15).

**Revendications**

1. Tête porte-lames, comportant un corps de base (1) sensiblement cylindrique, pourvu, sur sa zone périphérique de plusieurs rainures (20), ouvertes vers la face frontale et vers une partie de la surface périphérique extérieure, dans lesquelles est chaque fois disposé un support de plaque de découpage (2) pourvu d'une plaque de découpage (4), où, dans la direction de rotation circonférentielle, derrière le support de plaque de découpage (2), est prévue une clavette de réglage radial (7), déplaçable axialement, appuyant, par ses surfaces actives, contre le support de plaque de découpage (2) et contre le corps de base (1), ainsi qu'une clavette de réglage axial (11), disposée derrière le support de plaque de découpage (2), déplaçable en direction radiale au moyen d'une vis différentielle (12), où un coin de serrage (13), réglable radialement, est prévu en direction de rotation périphérique, devant le support de plaque de découpage (2), et le coin de serrage (13) et le support de plaque de découpage (2) présentent des surfaces de contact (21a,21b) susceptibles d'être mises en appui l'une contre l'autre, qui servent à fixer par serrage le support de plaque de découpage (2) en direction de la zone, située en arrière dans le sens de rotation, de la rainure (20), caractérisée en ce que les surfaces de contact (21a,21b) servent à la fixation par serrage du support de plage de découpage (2), également en direction de la zone, située axialement en arrière et radialement à l'intérieur, de la rainure (20) et en ce que les zones de contact (21a,21b) sont inclinées par rapport à un plan qui comprend l'axe de rotation du corps de base (1) et qui s'étend dans la zone de la rainure (20), et dont le prolongement, tracé chaque fois en direction de l'axe central du corps de base (1), est traversé par ce dernier.

2. Tête porte-lames, comportant un corps de base (1) sensiblement cylindrique, pourvu, sur sa zone périphérique de plusieurs rainures (20), ouvertes vers la face frontale et vers une partie de la surface périphérique extérieure, dans lesquelles est chaque fois disposé un support de plaque de découpage (2) pourvu d'une plaque de découpage (4), où, dans la direction de rotation circonférentielle, derrière le support de plaque de découpage (2), est prévue une clavette de réglage radial (7), déplaçable axialement, appuyant, par ses surfaces actives, contre le support de plaque de découpage (2) et contre le corps de base (1), ainsi qu'une clavette de réglage axial (11), disposée derrière le support de plaque de découpage (2), déplaçable en direction radiale au moyen d'une vis différentielle (12), où un coin de serrage (13), réglable radialement, est prévu en direction de rotation périphérique, devant le support de plaque de découpage (2), et le coin de serrage (13) et le support de plaque de découpage (2) présentant des surfaces de contact (21a,21b) susceptibles d'être mises en appui l'une contre l'autre, qui servent à fixer par serrage le support de plaque de découpage (2) en direction de la zone, située en arrière dans le sens de rotation, de la rainure (20), caractérisée en ce que, vers l'intérieur en direction radiale et derrière le support de plaque de découpage (2), par rapport au corps de base (1), est prévu dans la rainure (20) un dispositif prismatique à coin (10), susceptible d'être serré, à l'aide duquel on peut appliquer sur le support de plaque de serrage (2) un effort de serrage, agissant sensiblement radialement.

3. Tête porte-lames selon la revendication 1 ou 2, caractérisée en ce que tant le coin de serrage (13) qu'également le dispositif prismatique à coin (10) sont prévus.

4. Tête porte-lames selon l'une des revendications 1 à 3, caractérisée en ce que les surfaces de contact (21a,21b) sont planes entre le coin de serrage (13) et le support de plaque de découpage (2).

5. Tête porte-lames selon l'une des revendications 1 à 3, caractérisée en ce que l'une des surfaces de contact (21a) du support de plaque de découpage (2) présente une bosse sensiblement en forme de bande.

6. Tête porte-lames selon l'une des revendications 1 à 5, caractérisée en ce que le coin de serrage (13) est réalisé en s'effilant sensiblement en forme de tronc de cône, vers la zone située radialement à l'intérieur, et qu'il est réglable par rapport au corps de base (1), au moyen d'une vis différentielle (14) disposée de façon excentrique, et comprend un méplat plan, disposé en forme de coin, formant la surface de contact (21b), pour venir en appui sur le support de plaque de découpage (2).

7. Tête porte-lames selon l'une des revendications 1 à 6, caractérisée en ce que la surface de contact (21a) du support de plaque de découpage (2) s'étend depuis une zone située en arrière dans la direction périphérique, à l'arrière en direction axiale, vers une zone située plus en avant en direction périphérique, s'étend à l'avant en direction axiale.

8. Tête porte-lames selon l'une des revendications 2 à 7, caractérisée en ce que le dispositif prismatique à coin (10) comprend trois prismes (10a, 10b, 10c), un premier prisme (10a) étant disposé avec sa zone de pointe orientée radialement vers l'intérieur, avec sa surface de base tournée vers le support de plaque de découpage (2), et un deuxième et un troisième prismes (10b,10c) appuyant, par leurs surfaces de base, contre une zone de fond, située radialement à l'intérieur, de la rainure (20), et le deuxième et le troisième prismes (10b,10c) se trouvant en plus en appui sur le premier prisme (10a) et le support de plaque de découpage (2), et en ce que la précontrainte du dispositif prismatique à coin (10) s'effectue au moyen d'une vis de serrage (9) montée dans le support de plaque de découpage (2) et agissant sur le premier prisme (10a).

9. Tête porte-lames selon l'une des revendications 2 à 8, caractérisée en ce que le dispositif prismatique à coin (10) est disposé dans une rainure, ouverte vers l'intérieur, du support de plaque de découpage (2).

10. Tête porte-lames selon l'une des revendications 8 ou 9, caractérisée en ce que le premier prisme (10a) est équilatéral.

11. Tête porte-lames selon l'une des revendications 8 à 10, caractérisée en ce que le premier prisme (10a) fait avec ses surfaces de pointe un angle de 90°.

12. Tête porte-lames selon l'une des revendications 8 à 11, caractérisée en ce que la surface de contact du deuxième et du troisième prisme (10b,10c) avec le premier prisme (10a) est inclinée d'un angle plus grand par rapport à la zone de fond, radialement intérieure, de la rainure (20), que la surface de contact sur le support de plaque de découpage (2).

13. Tête porte-lames selon l'une des revendications 1 à 12, caractérisée en ce que la clavette de réglage radial (7) est réglable, au moyen d'une vis différentielle (8) montée à rotation dans la clavette de réglage radial (7) et dans le corps de base (1), l'axe de la vis différentielle (8) étant incliné vers l'axe de rotation du corps de base (1) et s'étend parallèlement à l'arête (22) radialement extérieure de la clavette de réglage radial (7).

14. Tête porte-lames selon l'une des revendications 1 à 13, caractérisée en ce que le plaque de découpage (4) est montée sur une cage à plaque de découpage (3) montée sur le support de plaque de découpage (2).

15. Tête porte-lames selon la revendication 14, caractérisée en ce que la cage à plaque de découpage (3) et la plaque de découpage (4) sont montées, au moyen d'une vis de fixation (5), sur le support de plaque de découpage (2) et pivotantes autour de l'axe de rotation de la vis de fixation (5).

16. Tête porte-lames selon la revendication 15, caractérisée en ce que la plaque de découpage (4) et la cage à plaque de découpage (3) présentent des éléments de prise à formes ajustées.

**17.** Tête porte-lames selon la revendication 16, caractérisée en ce que les éléments de prise à forme ajustées sont réalisées sous forme d'une liaison à rainure et clavette (24).

**18.** Tête porte-lames selon l'une des revendications 1 à 13, caractérisée en ce que la cage à plaque de découpage (3) est montée au moyen d'une vis de fixation (5), sur le support de plaque de découpage (2), et en ce que la plaque de découpage (4) est fixable au moyen d'un levier de serrage (23) monté sur la cage à plaque de découpage (3), cette dernière étant pivotante autour de l'axe de rotation de la vis de fixation (5).

**19.** Tête porte-lames selon l'une des revendications 15 à 18, caractérisée en ce que le mouvement de pivotement de la cage à plaque de découpage (3) est susceptible d'être provoqué au moyen de deux vis (6), montées sur le support de plaque de découpage (2) et susceptible d'être placées en action avec un appendice de la cage à plaque de découpage (3).

**20.** Tête porte-lames selon l'une des revendications 1 à 19, caractérisée en ce que le corps de base (1) présente au moins une rainure (25), pour recevoir, de façon à ce qu'elles puissent être déplacés, des masselottes d'équilibrages (15).

FIG.1

EP 0 282 090 B1

**FIG. 2**

FIG.3

FIG.4

FIG. 5

FIG.6